(19) Europäisches Patentamt
European Patent Office
Office européen des brevets

(11) **EP 2 668 231 B1**

(12) **EUROPEAN PATENT SPECIFICATION**

(45) Date of publication and mention
of the grant of the patent:
**29.10.2014 Bulletin 2014/44**

(21) Application number: **12708760.9**

(22) Date of filing: **30.01.2012**

(51) Int Cl.:
***C08L 23/06*** ^(2006.01)

(86) International application number:
**PCT/EP2012/051465**

(87) International publication number:
**WO 2012/101284 (02.08.2012 Gazette 2012/31)**

(54) **POLYETHYLENE COMPOSITION**

POLYETHYLENZUSAMMENSETZUNG

COMPOSITION DE POLYÉTHYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2011 EP 11152569**

(43) Date of publication of application:
**04.12.2013 Bulletin 2013/49**

(73) Proprietor: **Borealis AG**
**1220 Vienna (AT)**

(72) Inventor: **BURYAK, Andrey**
**A-4020 Linz (AT)**

(74) Representative: **Campbell, Neil Boyd**
**Dehns**
**St Bride's House**
**10 Salisbury Square**
**London**
**EC4Y 8JD (GB)**

(56) References cited:
**EP-A1- 1 772 485**      **EP-A1- 1 772 486**
**US-A1- 2010 105 839**

## Description

### Field of the Invention

The present invention relates to a new polyethylene copolymer composition for use in the manufacture of, *inter alia,* blow moulded articles showing excellent mechanical properties such as environmental stress cracking resistance whilst also having good processability. In particular, the invention relates to a multimodal polyethylene copolymer composition preferably comprising at least three fractions and to a multistage process for preparing this polyethylene composition. The invention also covers articles comprising said polyethylene composition and to the use of said composition for the production of a blow moulded article.

### Background art

Blow moulding is a moulding process commonly used to produce a number of household and industrial containers (HIC). In this process, the polymer is melted and extruded into a mould. Compressed air is then used to inflate and shape the polymer into the desired form.

The properties of key importance when considering the suitability of a polymer for use in extrusion blow moulding processes are commonly the environmental stress cracking resistance (ESCR), impact strength and the stiffness of the article formed from the polymer. High die swell is also desirable as it allows the polymer melt to fully enter into the mould, allowing for the production of complex-shaped articles. Low melt pressure is also desirable to minimise energy consumption.

In general, ESCR can be improved by the skilled man in known ways, e.g. by increasing the molecular weight of the polymer or by using a metallocene catalyst to manufacture a polymer. Higher molecular weight polymers and those made using metallocene catalysts are known to possess improved mechanical properties over, for example, Ziegler Natta polymers or polymers of lower molecular weight. However, these techniques for improving mechanical properties are only valuable if processability is maintained. Polymers with poor flow are not readily extruded or moulded and are therefore of limited value. Increased Mw and metallocene catalysis leads to poor processability.

High die swell and good processability are features of polymers made using Cr catalysis however, the mechanical properties of those polymers is poor. Ziegler-Natta catalysis offers improved mechanical properties over Cr catalysis (although not as good as metallocenes) but weaker processability (i.e. not as good as Cr) as these polymers offer lower die swell.

There is therefore a trade off between mechanical properties and processability and no catalyst offers the ideal package of properties. Those materials which exhibit the best mechanical properties tend to possess poor processability. Those materials which are readily processed have poor mechanical properties.

Polyethylene is commonly used in compositions for blow mouldings due to the attractive combination of its high mechanical strength and good stress crack resistance. The use of bimodal polyethylene compositions in blow moulding applications was discussed in EP-A-603935. Although good mechanical properties were achieved, the melt strength of the resulting polymers was found to be unsatisfactorily low, leading to problems in the extrusion stages.

The use of a trimodal composition, e.g. as in EP-A-1576047 was also found to be useful in making blow moulded articles.

Multimodal polyethylene compositions have also been discussed in EP-A-1772486 and EP-A-1228101, which relate to injection and compression moulded articles. In EP-A-1772485, certain trimodal polymers for blow moulding are discussed. As can be seen from the examples of this reference, the inventive examples have the same rheological properties as comparative example 5 (BS2581).

US2010/105839 describes trimodal blends for cap and closure manufacture.

There remains, however, a need for a polyethylene composition which is suitable for blow moulding and which provides the optimum balance between mechanical properties and processability. In particular, high stress cracking resistance and die swell are required. More particularly, high die swell and rheological broadness are desirable optionally in combination with high ESCR. These goals can be achieved using a multimodal polyethylene moulding composition preferably comprising at least three components with a high rheological polydispersity index as defined herein.

In particular, the polyethylene compositions of the invention possess die swell similar to Cr polyethylene and a rheological polydispersity index higher that that of Cr polyethylene. Furthermore, exceptional ESCR can be attained at conventional density. By mimicking the properties of Cr polyethylene there is no need to adjust processing equipment when moving from a Cr polyethylene to a polymer of the invention - the same set up can be used.

### Summary of Invention

A multimodal polyethylene copolymer composition prepared using a Ziegler Natta catalyst and having a density according to ISO 1183 at 23°C of at least 940 kg/m$^3$ and an MFR$_2$ according to ISO 1133 in the range of 0.05 to 10 g/10 min, wherein the composition has an ESCR according to ASTM 1693 of at least 300 hrs and a rheological polydispersity index of at least 3; and comprises:

A) 25 to 65 wt% of a lower molecular weight ethylene homopolymer fraction;
B) 25 to 55 wt% of a higher molecular weight ethylene homopolymer or copolymer fraction with at least one C$_3$-C$_{10}$ comonomer; and
C) 5 to 25 wt% of an ultra-higher molecular weight ethylene copolymer fraction with at least one C$_3$-C$_{10}$ comonomer.

**Detailed Description of Invention**

The tests for any claimed parameter are given in the "analytical tests" section of the text which precedes the examples.

Wherever the term "molecular weight" is used herein, the weight average molecular weight is meant.

Usually, a polyethylene composition comprising at least two polyethylene fractions, which have been produced under different polymerization conditions resulting in different molecular weights and molecular weight distributions for the fractions, is referred to as "multimodal". Accordingly, in this sense the compositions of the invention are multimodal polyethylenes. The prefix "multi" relates to the number of different polymer fractions the composition consists of. In this case, the compositions consisting of three fractions are called "trimodal".

The polyethylene composition of the invention preferably comprises at least three components and is preferably a trimodal polymer (i.e. it comprises 3 components only). Ideally, the composition comprises a lower molecular weight ethylene homopolymer or copolymer fraction A, a higher molecular weight ethylene homopolymer or copolymer fraction B and an ultra-high molecular weight ethylene copolymer fraction C as defined in detail below.

The polyethylene composition of the invention has been found to allow the formation of articles having an ideal balance of properties. They have excellent mechanical properties and are readily processed. In particular, articles exhibit an excellent stiffness/ESCR balance whilst also possessing processability properties that are as good as those of Cr polymers. The compositions of the invention are also rheologically broad with a rheological polydispersity index of preferably at least 3.

**Composition**

The multimodal composition of the invention has a density according to ISO 1183 at 23°C of at least 940 kg/m$^3$, preferably at least 945 kg/m$^3$, more preferably at least 950 kg/m$^3$, especially at least 956 kg/m$^3$. The upper limit for density may by 980 kg/m$^3$, preferably 975 kg/m$^3$, especially 970 kg/m$^3$. A highly preferred density range is 956 to 965 kg/m$^3$, especially 956 to 960 kg/m$^3$.

The MFR$_2$ according to ISO 1133 of the composition of the invention is in the range of 0.05 to 10 g/10 min. Preferably the polyethylene composition has an MFR$_2$ of 0.075 to 5 g/10min, more preferably 0.1 to 1 g/10 min. Highly preferably, the MFR$_2$ is in the range of 0.1 to 0.5 g/10min.

The composition of the invention can be extruded with a melt pressure of less than 100 bar. Moreover, the melt temperature can be less than 200°C, preferably less than 198°C, especially less than 197°C. The low melt pressure is a function of the exceptional (rheological) broadness of the molecular weight distribution. This can be seen in the rheological polydispersity index but also in the shear thinning behaviour of the polymer of the invention.

An important feature of the composition of the invention is its rheological polydispersity index. Furthermore, the compositions of the invention preferably have a rheological polydispersity index (rheological PI) of at least 3, preferably at least 5, especially at least 8. The term rheological polydispersity index is used herein to refer to the value of $10^5/G_c$ where $G_c$ stands for the cross-over modulus. Cross-over modulus is a rheological parameter determined as defined below. The rheological polydispersity index is therefore measured rheologically here and is not the same as Mw/Mn as determined by GPC. The values of rheological polydispersity index we obtain are unusually broad as can be seen from the comparison with other grades in the examples.

The Shear Thinning Index (SHI) 2.7/210 of the multimodal polyethylene composition is preferably at least 50, more preferably at least 60 and most preferably at least 75. Even more preferably, the value of SHI$_{2.7/210}$ may be 100 or more, such as 150 or more, even 200 or more.

It is particularly preferred if the polymer composition of the invention has both a rheological PI of greater than 3 and a SHI$_{2.7/210}$ of more than 50, especially a rheological PI of greater than 8 and a SHI$_{2.7/210}$ of more than 60.

One of the aims of the invention is to mimic the processability of Cr based polymers. This has been achieved in terms of rheological polydispersity index and shear thinning behaviour as shown in the examples. Furthermore, the inventors sought to match the die swell behaviour of Cr made polymers. Die swell occurs after a polymer stream is compressed by entrance into a die, and is followed by a partial recovery or "swell" back to the former shape and volume of the polymer after exiting the die - hence the term die swell. The swell ratio is based on the ratio of the thickness of the extrudate to the die opening. The terms die swell and swell ratio are used interchangeably here.

Die swell varies depending on the applied shear rate but at high shear, the polymers of the invention actually surpass the die swell behaviour of Cr polymers.

The composition of the invention may have a swell ratio of at least 1.7 at the apparent shear rate of 14.4 s$^{-1}$. Alternatively, the composition of the invention may have a swell ratio of at least 1.8 at the apparent shear rate of 28.8 s$^{-1}$. Alternatively, the composition of the invention may have a swell ratio of at least 1.9 at the apparent shear rate of 72 s$^{-1}$. The composition of the invention may have a swell ratio which satisfies two of these or all these requirements. As will be seen from the examples, the die swell properties of the claimed materials are on a par with Cr polyethylenes.

The combination of a swell ratio at 14.4 s$^{-1}$ of at least 1.7 (or one of the other die swell parameters at other shear rates), and a $SHI_{2.7/210}$ value of at least 50 , more preferably at least 60 is a further preferred feature of the invention. The further presence of a high PI and high ESCR as defined herein is also beneficial.

The ability to mimic the die swell behaviour of Cr polymers is particularly advantageous as blow moulding equipment is typically set up to deal with Cr polymers. By mimicking the Cr polymer die swell properties, this equipment can be more easily adapted to deal with polymers made by other catalysts.

The mechanical properties of the polymer of the invention are also excellent. The composition of the invention preferably has an environmental stress crack resistance (ESCR) measured using the Bell Test according to ASTM 1693, condition B at 50°C, of at least 300 h, preferably at least 400 h, especially at least 500 h. In some embodiments, ESCR can be as high as 750 hrs or more, such as 1000 hrs or more. Values as high as 1250 or more have been achieved.

This incredible ESCR value can be achieved without compromising tensile modulus. The tensile modulus (E-modulus) of the composition measured on compression moulded samples of the multimodal polyethylene moulding composition is at least 1000 MPa, preferably at least 1150 MPa, more preferably at least 1200 MPa and most preferably at least 1300 MPa or more.

The Mw of the composition of the invention may be at least 100,000 e.g. up to 250,000, e.g. 110,000 to 200,000.

The composition of the invention can, of course, contain any combination of these parameters.

As will be noted below, the composition of the invention can be made in a multistage process. In the preferred trimodal embodiment, typically fraction A will be made first followed by fraction B and C. The properties of fraction A can be determined after step 1.

The $MFR_5$ according to ISO 1133 of the composition formed by components A and B may be in the range of 10 to 80 g/10 min. Preferably the polyethylene composition has an $MFR_5$ of 30 to 60 g/10min.

As already stated above, the multimodal polyethylene composition of the invention preferably comprises at least three different ethylene polymer fractions ideally having distinct molecular weights.

**Fraction A**

Fraction A) is a homo- or copolymer fraction. Preferably it has a weight average molecular weight $M_w$ below 40 kg/mol and is therefore a lower molecular weight (LMW) fraction (as compared to fractions B and C). The lower limit for $M_w$ of the LMW fraction is preferably 5 kg/mol. Preferably, the LMW fraction A has a weight average molecular weight of 15 to 40 kg/mol, more preferably 20 to 30 kg/mol.

The $MFR_{190/2}$ according to ISO 1133 of fraction A is preferably at least 50 g/10min, more preferably at least 100 g/10min. The upper limit for the $MFR_2$ of the LMW fraction is preferably 1000 g/10min.

The Mw of fraction A should therefore be lower than that of either fraction B or C. Alternatively (or as well), the $MFR_2$ of fraction A should be greater than that of fraction B and C.

The density of the LMW component according to ISO 1183 at 23°C of the fraction A is higher than 940 kg/m$^3$, preferably 940 to 975 kg/m$^3$. Alternative preferred ranges are 955 to 975 kg/m$^3$, preferably 965 to 975 kg/m$^3$.

The term ethylene copolymer as used herein is intended to encompass polymers comprising repeat units deriving from ethylene and at least one $C_3$-$C_{10}$ alpha olefin. Preferred copolymers in any aspect of the invention are binary and therefore comprise ethylene and a single comonomer. It is preferred however if fraction A is a homopolymer.

**Fraction B**

Fraction B) is preferably a homo- or copolymer fraction with at least one $C_3$-$C_{10}$ alpha olefin. Preferably the HMW fraction B) is a copolymer. Preferably fraction B has a higher molecular weight (HMW) than fraction A.

The weight content of fraction B may exceed that of fraction C but will typically be less than that of fraction A.

**Fraction C**

Fraction C is preferably a copolymer fraction with at least one $C_3$-$C_{10}$ alpha olefin. Preferably, fraction C is manufactured to have an ultra molecular weight (UHMW). Fraction C typically forms the lowest weight component of the three components.

## Amounts of fractions

It is preferred if the lower molecular weight component fraction (A) forms the largest component of the composition. Thus, the weight percentage of either fraction B or fraction C (or both) should preferably be less than that of fraction A.

Preferably, components A and B should contribute at least 25 wt% of the composition, preferably at least 30 wt%, especially at least 35 wt% of the composition.

Preferred ranges for fraction A are 25 to 65 wt%, more preferably, 30 to 55 wt%.

It is highly preferred if the fraction B makes up less than 60 wt% of the overall blend. Preferred ranges include 25 to 55 wt%, preferably 30 to 45 wt%.

The amount of fraction C is typically much less than that of fractions A and B. The amount of fraction C may range from 5 to 25 wt%, preferably 7.5 to 15 wt%.

It is preferred if Fraction B is a copolymer. It is preferred if two fractions of the composition are copolymers and one fraction is a homopolymer.

In a preferred embodiment Fraction A is an ethylene homopolymer while fractions B and C are ethylene copolymers.

The term ethylene homopolymer as used herein is intended to encompass polymers which consist essentially of repeated units deriving from ethylene. Homopolymers may, for example, comprise at least 99.8 wt%, preferably at least 99.9 wt%, of repeat units deriving from ethylene. In a preferred embodiment only ethylene units are detectable in the homopolymer fraction.

The term ethylene copolymer as used herein is intended to encompass polymers comprising repeat units deriving from ethylene and at least one $C_3$-$C_{10}$ copolymer.

The comonomers which can be employed include $C_{3-10}$ alpha olefins, preferably selected from but-1-ene, hex-1-ene, 4-methyl-pent-1-ene, hept-1-ene, oct-1-ene, and dec-1-ene, more preferably but-1-ene, hex-1-ene and oct-1-ene. Preferably hexene or butene, or a mixture of hexene and butene is used. In a most preferred embodiment, butene is used in Fraction B and C.

## Manufacture

The composition of the invention can be prepared by mechanical blending of the at least three fractions in the desired amount, e.g. using a conventional compounding or blending apparatus, like a Banbury mixer, a 2-roll rubber mill, Buss-co-kneader or a twin screw extruder. In this case it has to be ensured that proper homogenization is achieved.

Fractions A, B and C used for mechanical blending are prepared separately with any conventional ethylene homo- or co-polymerization method, e.g. in gas phase, slurry phase, liquid (bulk) phase using conventional reactors, such as loop reactor, gas phase reactor, semi-batch or batch reactor, in the presence of a polymerization catalyst as described further below in connection with multistage processes.

Preferably, the fractions are produced in a slurry reaction, preferably in a loop reactor, or in a gas phase reaction.

Whilst it is within the scope of the invention for the fractions to be blended, it is preferred if the polyethylene composition can be produced by *in-situ* blending of the at least three fractions. This *in-situ* blending may occur in one reaction stage or in a multistage process, preferably a multistage process.

A multistage process is defined to be a polymerization process in which a polymer comprising two or more fractions is produced by producing each or at least two polymer fraction(s) in a separate reaction stage, usually with different reaction conditions in each stage, in the presence of the reaction product of the previous stage which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, stirred tank reactors, batch reactors

The multimodal polyethylene composition of the invention can be prepared via a multistage process comprising successive polymerization steps carried out under predetermined different reaction conditions in respective reactors arranged in series so as to obtain respective polyethylene fractions having different molecular weights. Monomers and a molar mass regulator, preferably hydrogen, are firstly polymerized in a first reactor under first reaction conditions in the presence of a suspension medium and a suitable catalyst, then transferred to a second reactor and further polymerized under second reaction conditions, and further transferred to a third reactor and further polymerized under third reaction conditions, with the first reaction conditions differing from the second and third reaction conditions so as to obtain three polyethylene fractions having different molecular weights.

In a preferred embodiment, the first reactor is a loop reactor and both the second and third reactors are gas-phase reactors.

In such a case, the properties of the fractions produced in the second and third step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

The conditions used in the process of the invention are generally known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst and a chain transfer agent such as hydrogen. The diluent is typically an inert aliphatic hydrocarbon, preferably isobutane or propane.

The higher molecular weight component can then be formed in a gas phase reactor using the same catalyst. It can be formed under supercritical conditions if desired. A further gas phase component can then be prepared using varied conditions.

In each production method a polymerization catalyst is used. Preferably the same catalyst is used in all steps. The polymerization catalyst is a Ziegler-Natta (ZN) catalyst. All components of the blend are made using a Ziegler-Natta catalysis and ideally the same calalysts is used for each component. The catalyst may be supported, e.g. with conventional supports including silica, Al-containing supports and magnesium dichloride based supports.

Preferred Ziegler-Natta catalysts comprise a transition metal component and a cocatalyst.

The transition metal component comprises typically a Ti compound as an active metal.

In addition, the catalyst may contain compounds of other metals or elements, like compounds of Groups 2, 13 and 17, such as magnesium compounds and aluminium compounds. Preferably, the transition metal component is a solid and supported on a support material, such as inorganic oxide carrier or magnesium halide.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of a preferred alcohol. The magnesium dialkyl may be any compound of magnesium bonding to two alkyl groups, which may be the same or different. Butyl-octyl magnesium is one example of a preferred magnesium dialkyl.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. Especially preferably the titanium compound is titanium tetrachloride.

Thus, especially preferably the transition metal component comprises a titanium halide, a magnesium alkoxy alkyl compound and an aluminium alkyl dihalide supported on an inorganic oxide carrier.

The catalyst can be prepared by sequentially by contacting the carrier with the above mentioned compounds, as described in EP-A-688794 or WO 99/51646. Alternatively, it can be prepared by first preparing a solution from the components and then contacting the solution with a carrier, as described in WO 01/55230.

The catalysts disclosed in WO 95/35323 are especially useful as they are well suited in production of both a polyethylene having a higher molecular weight and a polyethylene having a lower molecular weight.

Conventional cocatalysts, supports/carriers, electron donors can be used. The use of ZN catalysts is well known in the art.

Hydrogen may be introduced into any reactor to control the molecular weight of the polymer as is well-known and routine in the art. The concentration of hydrogen should be such that the lower molecular weight component has a desired specified $MFR_2$. Due to high conversion rates of hydrogen, the required concentration of hydrogen in the reactor which produces the lower molecular weight component is low. Thus, the ratio of hydrogen to ethylene may be between 0.4 and 1 mol hydrogen per 1 kmol of ethylene. The concentration of hydrogen in the LMW phase may therefore be or the order of 3000 to 5000 ppm.

In order to produce the higher molecular weight component it is also possible to use hydrogen in, for example, the gas phase reactor although this is generally at a lower concentration than used in the LMW reactor, e.g. the ratio of hydrogen to ethylene should be lower than 0.4 mol/kmol, preferably less than 0.3 mol/kmol and in particular less than 0.2 mol/kmol. The concentration of hydrogen in the HMW phase may therefore be or the order of 500 to 2000 ppm.

Regarding comonomer concentrations, higher $\alpha$-olefins need to be present in greater concentrations than lower alpha olefins to ensure the same levels of incorporation.

The amount of comonomer used in the gas phase reactor if 1-butene is the comonomer may range from 3 to 50 mol/kmol, preferably 5 to 20 mol per kmol of ethylene.

The polymer composition of the invention is preferably in the form of pellets or powder. By pellets is meant particles of about 50 $\mu$m to 8 mm in size, preferably 0.5 to 6 mm, especially 1 to 4 mm in size. Pellets are obtained by conventional cutting and pelletising techniques and are employed in this invention because they can be added directly to an extruder. Pellets are distinguished from polymer powders where particle sizes are less than 50 $\mu$m.

The use of pellets ensures that the polymer of the invention is capable of being converted in an article by the simple in line addition of the pellets to an extruder.

The composition of the invention may contain usual additives for utilization with polyolefins, such as pigments (for example carbon black), stabilizers (antioxidant agents), antacids and/or anti-UVs, antistatic agents and utilization agents (such as processing aid agents).

Parameters of the polymer composition described above are typically measured on a polymer before addition of additives however the parameters also apply when additives are present. Preferably, the amount of these additives is 10 wt% or below, further preferred 8 wt% or below, of the blend.

The composition of the invention preferably consists essentially of the multimodal polymer as hereinbefore described, i.e. the polymer is the only polyolefin present but standard polymer additives may also be present.

It is within the scope of the invention for the composition to be blended with further polymer components to make an ideal blend for moulding. Other polymers with which the composition of the invention could be blended include, HDPE, LLDPE, LDPE or MDPE. A mixture of two compositions of the invention might also be used.

### Applications

The composition of the invention may be used in the manufacture of moulded articles, e.g. injection moulded, rotomoulded or blow moulded articles. The composition of the invention is primarily designed for use in the manufacture of household and industrial containers (HIC). The present invention further concerns, therefore, a blow moulded article comprising the polyethylene composition as described hereinbefore.

Viewed from another aspect the invention provides a process for preparing a blow moulded article comprising blow moulding the composition as hereinbefore defined into an article. The invention will now be defined with reference to the following non limiting examples and figures.

### Description of the Figures

Figure 1 shows the relationship between density vs. MFR$_2$ for compositions of the invention relative to some comparative compositions. The graph shows that the compositions of the invention have broadly comparable MFR and density to the comparative compositions and hence shows that these may be directly compared.

Figure 2 shows the relationship between shear thinning index vs. rheological polydispersity index for compositions of the invention. The compositions of the invention have remarkable rheological PI and SHI$_{2.7/210}$.

Figure 3 shows swell ratio vs. apparent shear rate for compositions of the invention. At high apparent shear values, the compositions of the invention out perform Cr compositions.

Figure 4 shows the relationship between die swell vs. G' for compositions of the invention. Figure 4 emphasises the properties of the invention.

Figure 5 shows the results from the ESCR bell test for compositions of the invention.

Figure 6 depicts a theoretical cross modulus determination curve.

### Analytical Information

Any parameter mentioned above is measured according to the following protocols:

**GPC:** Molecular weight averages, molecular weight distribution, and polydispersity index (Mn, Mw, MWD, PDI)

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A Waters GPCV2000 instrument, equipped with differential refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert butyl-4-methylphenol) as solvent at 140 °C and at a constant flow rate of 1 mL/min. 209.5 $\mu$L of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants for PS, PE and PP used are as per ASTM D 6474-99. All samples were prepared by dissolving 0.5 - 4.0 mg of polymer in 4 mL (at 140 °C) of stabilized TCB (same as mobile phase) and keeping for max. 3 hours at max. 160°C with continuous gentle shaking prior sampling into the GPC instrument.

**Density**

Density of the polymer was determined at 23°C according to ISO 1183-1987 method D on compression-moulded specimens.

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C and may be determined at different loadings such as 2.16 kg ($MFR_{190/2}$), 5 kg ($MFR_{190/5}$) or 21.6 kg ($MFR_{190/21}$).

## Rheology

Rheological parameters such as Shear Thinning Index SHI and complex viscosity are determined by using a rheometer, preferably a Anton Paar Physica MCR 300 Rheometer on compression moulded samples under nitrogen atmosphere at 190°C using 25 mm diameter plates and plate geometry with a 1.8 mm gap according to ASTM 1440-95. The oscillatory shear experiments were done within the linear viscosity range of strain at frequencies from 0.05 to 300 rad/s (ISO 6721-1). Five measurement points per decade were made. The method is described in detail in WO 00/22040.
The values of storage modulus (G'), loss modulus (G"), complex modulus (G*) and complex viscosity ($\eta$*) were obtained as a function of frequency ($\omega$). $\eta_{100}$ is used as abbreviation for the complex viscosity at the frequency of 100 rad/s.
Shear thinning index (SHI), was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.).
SHI value is obtained by calculating the complex viscosities at given values of complex modulus and calculating the ratio of the two viscosities. For example, using the values of complex modulus of 2.7 kPa and 210 kPa, then $\eta$*$_{2.7kPa}$ and $\eta$*$_{210kPa}$ are obtained at a constant value of complex modulus of 2.7 kPa and 210 kPa, respectively. The shear thinning index $SHI_{2.7/210}$ is then defined as the ratio of the two viscosities $\eta$*$_{2.7}$ and $\eta$*$_{210}$, i.e. $\eta_{2.7}/\eta_{210}$.

**Rheological polydispersity index**

Rheological polydispersity index (rheological PI) was calculated as $10^5/G_c$ where $G_c$ stands for the cross-over modulus.

## Crossover Modulus $G_c$

The cross-over modulus is related to the rheological polydispersity index by the equation:

$$PI = 10^5/G_c$$

The cross over modulus $G_c$ is the value of G' (storage modulus) and G" (loss modulus) at the frequency where the two moduli are equal. That is where the curves of G'($\omega$) and G"($\omega$) cross. Fitting the points on both curves in the vicinity of the cross over point with cubic splines permits an objective identification of the cross over modulus.

**Swell ratio (Die Swell)**

The die swell was determined using a Triple Bore Capillary Rheometer, Rheograph 6000 (Göttfert GmbH, Germany), coupled with a high resolution laser detection device. The diameter detector was a Zumbach Odac 30J (emitter/receiver system), Laser type: laser diode VLD 0.9 mW and Laser class 2, wavelength: 630-680 nm, P: <1mW
The following test conditions were employed:

The experiments were performed at 210°C +/- 1°C. The sample was preheated for 10 mins.
Test piston: 11.99 mm (diameter)
Test barrel: 12 mm (diameter)
Round hole die length/diameter/run in angle: 30mm/2mm/180°
Pressure transducer: 500bar +/-2.5
Distance die exit / laser beam: 20mm +/-1
Distance die exit / pneumatic cut device: 65mm +/-1

Apparent shear rates:

2.88, 7.20, 14.4, 28.8, 72.0, 144.0 s$^{-1}$

Conditions for measure point take over at the viscosity measurement and swell determination:

Pressure stability: comparison time: 7s; take over tolerance: 5%
Number of measurements for each apparent shear rate: 2

**Test Procedure:**

Before start of the measurement cut the extrudate with the pneumatic cut device (extrudate length 65mm). First step is a viscosity measurement beginning with the lowest apparent shear rate. After the take over of the measure point, immediately the swelling determination begins with the same apparent shear rate as was used for the viscosity measurement. At this point, the piston stops. All steps are repeated for each apparent shear rate.

**Evaluation**

The reported Swell ratio (dds) is the average of two measurements at test temperature.
The swell ratio is determined as the ratio between the strand diameter and the die diameter, as follows:

$$dds = \frac{dstrand^2}{ddie^2}$$

The method complies with ASTM D 3835 - 02 "Standard Test Method for Determination of Properties of Polymeric Materials by Means of a Capillary Rheometer"
**Tensile modulus** was measured at 23°C.
(according to ISO3167 - Multipurpose test specimen, type B (compression moulded) according to ISO 527-2:1993. The modulus was measured at a speed of 50mm/min (Testing speed of 5mm/min for brittle materials with an strain at break <10%).

**Environmental Stress Crack Resistance**

Environmental Stress Crack Resistance (ESCR) was measured using the Bell Test according to ASTM 1693, condition B at 50°C. For the Bell test, the average of two F50 values is given in the table. Each F50 was calculated from 10 specimens. For the samples which didn't break after 2000 hours, the test was interrupted.

### Examples

### Examples 1 and 2

#### Complex preparation:

87 kg of toluene was added into the reactor. Then 45.5 kg Bomag A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

#### Solid catalyst component preparation:

275 kg silica (ES747JR of Crossfield, having average particle size of 20 microns) activated at 600°C in nitrogen was charged into a catalyst preparation reactor. Then, 411 kg 20 % EADC (2.0 mmol/g silica) diluted in 555 litres pentane was added into the reactor at ambient temperature during one hour. The temperature was then increased to 35°C while stirring the treated silica for one hour. The silica was dried at 50°C for 8.5 hours. Then 655 kg of the complex prepared as described above (2 mmol Mg/g silica) was added at 23°C during ten minutes. 86 kg pentane was added into the reactor at 22 DEG C during ten minutes. The slurry was stirred for 8 hours at 50 DEG C. Finally, 52 kg $TiCl_4$ was added during 0.5 hours at 45°C. The slurry was stirred at 40°C for five hours. The catalyst was then dried by purging with nitrogen.

#### Polyethylene moulding compositions

Reaction parameters are disclosed in Table 1.

Table 1

| Prepolymerisation | | |
|---|---|---|
| | Inv. Ex. 1 | Inv. Ex. 2 |
| Temperature [°C] | 60 | 60 |
| Pressure [bar] | 61 | 61 |
| Catalyst feed [g/h] | 2.4 | 2.3 |
| Antistatic feed [ppm] | 10.0 | 10.0 |
| $C_2$ feed [kg/h] | 2.0 | 2.0 |
| $H_2$ feed [g/h] | 9.8 | 9.6 |
| $C_3$ feed [kg/h] | 44.2 | 44.1 |
| Production rate [kg/h] | 1.9 | 1.9 |
| **Reactor 1 - Loop (Fraction A)** | | |
| Temperature [°C] | 95 | 95 |
| Pressure [bar] | 57 | 57 |
| $C_2$ feed [kg/h] | 37 | 37 |
| $H_2$ feed [g/h] | 117 | 117 |
| $C_3$ feed [kg/h] | 83 | 83 |
| $C_2$ concentration [mol%] | 3.2 | 3.7 |
| $H_2/C_2$ ratio [mol/kmol] | 576 | 524 |
| Production rate [kg/h] | 35.2 | 35.0 |
| Split [wt%] | 51 | 52 |
| **Reactor 2 - Gas Phase (Fraction B)** | | |
| Temperature [°C] | 90 | 90 |

(continued)

| Reactor 2 - Gas Phase (Fraction B) | | |
|---|---|---|
| Pressure [bar] | 20 | 20 |
| $C_2$ feed [kg/h] | 33 | 34 |
| $H_2$ feed [g/h] | 213.58 | 285.98 |
| $C_4$ feed [kg/h] | 0.6 | 0.7 |
| $C_2$ concentration [mol%] | 13.4 | 15.5 |
| $H_2$ conc. [mol%] | 6.7 | 7.7 |
| $H_2/C_2$ ratio [mol/kmol] | 501.00 | 493.04 |
| $C_4/C_2$ ratio [mol/kmol] | 29 | 30 |
| $C_4/C_2$ feed ratio [g/kg] | 18 | 22 |
| production rate [kg/h] | 29 | 29 |
| Split [wt%] | 41 | 40 |
| Reactor 3 - Gas Phase (Fraction C) | | |
| Temperature [°C] | 85 | 85 |
| Pressure [bar] | 21 | 20 |
| $C_2$ feed [kg/h] | 31 | 31 |
| $H_2$ feed [g/h] | 9.73 | 10.34 |
| $C_4$ feed [kg/h] | 0.6 | 0.7 |
| $H_2$ conc. [mol%] | 0.155 | 0.138 |
| $C_2$ conc. [mol%] | 13.8 | 13.0 |
| $H_2/C_2$ ratio [mol/kmol] | 11.2 | 10.6 |
| $C_4/C_2$ ratio [mol/kmol] | 19 | 14 |
| $C_4/C_2$ feed ratio [g/kg] | 19 | 24 |
| production rate [kg/h] | 7 | 5 |
| Final $MFR_2$ [g/10 min] | 0.33 | 0.23 |
| Final $M_w$ [g/mol] | 126800 | 134000 |
| Final Density [kg/m$^3$] | 958 | 957 |

Basic properties of Examples 1 and 2 are presented in the Table 2. Their properties are compared with a commercial bimodal HDPE (BS2581), a unimodal Cr polyethylene and commercially available resins ACP5831 (HDPE) and ACP6031 (HDPE). Their properties are given below.

Table 2 - Basic properties of polymer compositions

| | Inv. Ex. 1 | Inv. Ex. 2 | Bimodal HDPE | Unimodal chromium | ACP5831 | ACP6031 |
|---|---|---|---|---|---|---|
| Density kg/m$^3$ | 958 | 957 | 959 | 956 | 957 | 957 |
| $MFR_2$ g/10 min | 0.32 | 0.23 | 0.29 | 0.20 | 0.33 | 0.41 |
| Mw [g/mol] | 126800 | 134100 | 183700 | 191600 | 168900 | 164500 |

## Mechanical and Processability Properties

Mechanical and processability properties of the blends are presented in Table 3.

Table 3 - Mechanical and processability properties of the compositions

| | Inv. Ex.1 | Inv. Ex 2 | Bimodal HDPE | Unimodal chromium | ACP5831 | ACP6031 |
|---|---|---|---|---|---|---|
| Swell ratio at 14.4 s$^{-1}$ | 1.82 | 1.77 | 1.57 | 1.90 | 1.50 | 1.49 |
| Swell ratio at 28.8 s$^{-1}$ | 1.91 | 1.86 | 1.65 | 1.95 | 1.6 | 1.59 |
| Swell ratio at 72 s$^{-1}$ | 2.11 | 2.07 | 1.76 | 2.04 | 1.67 | 1.68 |
| ESCR F50,[h] | 1452 | >2000 | 141 | 44 | 195.6 | 96.4 |
| SHI [2.7/210] | 227 | 238 | 39.3 | 52 | 24 | 22 |
| Rheological PI, Pa$^{-1}$ | 9.98 | 9.75 | 2.56 | 2.76 | 1.94 | 1.84 |
| G' [at 2kPa], Pa | 1405 | 1395 | 864 | 1197 | 678 | 619 |
| Tensile Modulus, MPa | 1325 | 1313 | 1426 | 1287 | 1376 | 1487 |

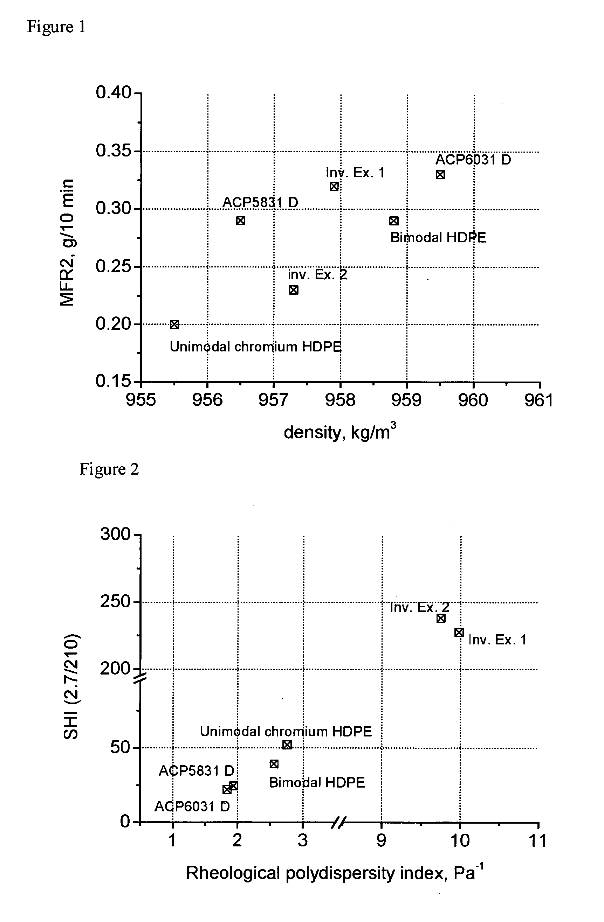

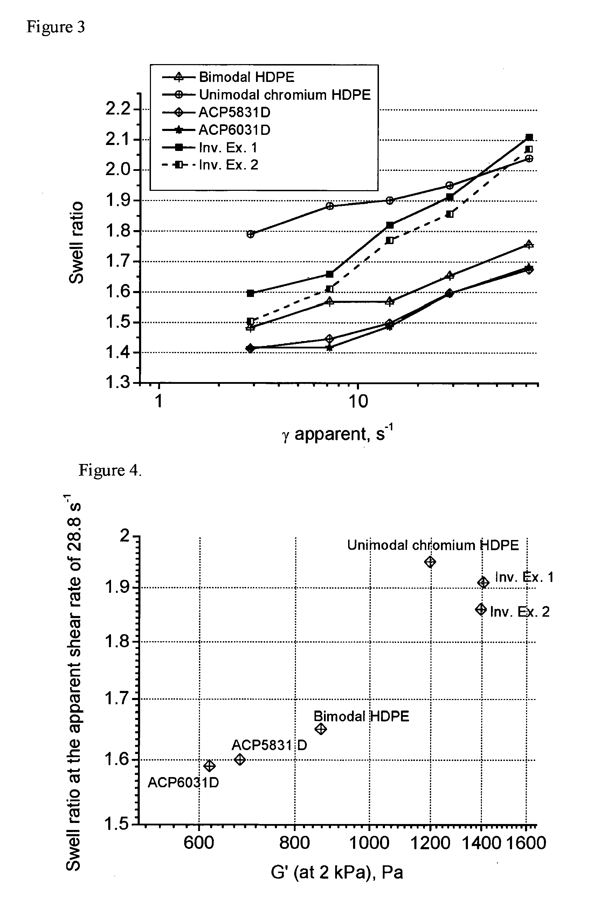

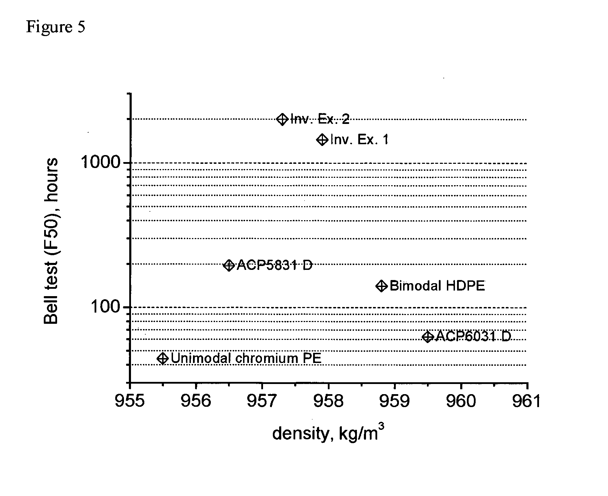

The comparison of mechanical properties in a graphical form is shown in Figures 1 to 5. As can be seen from these graphs, at similar density, the inventive compositions show a superior balance between mechanical properties and processability than any of the reference blends.

**Bottle Manufacture**

The polymers of the invention and the comparative polymers were extruded and blown into 1 L bottles. The relationship between melt pressure and melt temperature is shown in Table 4.

| | Melt temperature | Melt pressure |
|---|---|---|
| | °C | bar |
| BS2581 | 197 | 99 |
| ACP5831 D | 198 | 118 |
| ACP6031 D | 198 | 120 |
| IE1 | 196 | 83 |
| IE2 | 196 | 89 |

A 10 to 15% decrease in melt pressure can be observed for the examples of the invention realtive to BS2581. Relative to the ACP polymers, improvement is even more marked. The rheological improvements observed therefore allow lower melt pressures to be used.

**Claims**

1. A multimodal polyethylene copolymer composition prepared using a Ziegler Natta catalyst and having a density according to ISO 1183 at 23°C of at least 940 kg/m$^3$ and an MFR$_2$ according to ISO 1133 in the range of 0.05 to 10 g/10 min, wherein the composition has an ESCR according to ASTM 1693 of at least 300 hrs and a rheological polydispersity index of at least 3; and comprises:

   A) 25 to 65 wt% of a lower molecular weight ethylene homopolymer fraction;
   B) 25 to 55 wt% of a higher molecular weight ethylene homopolymer or copolymer fraction with at least one C$_3$-C$_{10}$ comonomer; and
   C) 5 to 25 wt% of an ultra-higher molecular weight ethylene copolymer fraction with at least one C$_3$-C$_{10}$ comonomer.

2. A multimodal polyethylene copolymer composition as claimed in claim 1 wherein the composition has a swell ratio of at least 1.7 at an apparent shear rate of 14.4 s$^{-1}$.

3. A multimodal polyethylene copolymer composition as claimed in claim 1 wherein the composition has an ESCR of at least 300 hrs and an $SHI_{2.7/210}$ of at least 50, preferably at least 60.

4. A multimodal polyethylene copolymer composition as claimed in claim 1 wherein the composition has a swell ratio of at least 1.8 at an apparent shear rate of 28.8 $s^{-1}$.

5. A multimodal polyethylene copolymer composition as claimed in claim 1 wherein the composition has a swell ratio of at least 1.9 at an apparent shear rate of 72 $s^{-1}$.

6. A multimodal polyethylene copolymer composition as claimed in claim 1 wherein the composition has a G' value at 2 kPa of at least 1000 Pa.

7. The composition according to any preceding claim wherein the density is at least 950 kg/m$^3$, preferably at least 956 kg/m$^3$.

8. The composition according to any preceding claim having a rheological polydispersity index of at least 5.

9. The composition according to any preceding claim having a G' value at 2 kPa of at least 1000.

10. The composition according to any preceding claim having a swell ratio of at least 1.7 and an apparent shear rate of 14.4 $s^{-1}$, a swell ratio of at least 1.8 at an apparent shear rate of 28.8 $s^{-1}$ and a swell ratio of 1.9 at an apparent shear rate of 72 $s^{-1}$.

11. The composition according to any preceding claim having an ESCR Bell test result of at least 1000 hours.

12. The composition according to any preceding claim wherein the at least one comonomer is butene, hexene or octene, preferably butene.

13. An article comprising a polyethylene composition according to any preceding claim, preferably a blow moulded article.

14. A multimodal polyethylene copolymer composition as claimed in claim 1 having

a swell ratio of at least 1.7 at an apparent shear rate of 14.4 $s^{-1}$
an $SHI_{2.7/210}$ of at least 50,
a swell ratio of at least 1.8 at an apparent shear rate of 28.8 $s^{-1}$; and
a swell ratio of at least 1.9 at an apparent shear rate of 72 $s^{-1}$.

**Patentansprüche**

1. Eine multimodale Polyethylenkopolymerzusammensetzung hergestellt unter Verwendung eines Ziegler-Natta-Katalysators, die eine Dichte gemäß ISO 1183 bei 23 °C von mindestens 940 kg/m$^3$ und einer $MFR_2$ gemäß ISO 1133 im Bereich von 0,05 bis 10 g/10 min hat, worin die Zusammensetzung einen ESCR gemäß ASTM 1693 von mindestens 300 Stunden und einen rheologischen Dispersitätsindex von mindestens 3 hat; und welche umfasst:

A) 25 bis 65 Gew.-% einer Niedrigmolekulargewichtsethylenhomopolymerfraktion;
B) 25 bis 55 Gew.-% einer Hochmolekulargewichtsethylenhomopolymer- oder -kopolymerfraktion mit mindestens einem $C_3$-$C_{10}$ Komonomer; und
C) 5 bis 25 Gew.-% einer Ultrahochmolekulargewichtsethylenkopolymerfraktion mit mindestens einem $C_3$-$C_{10}$ Komonomer.

2. Multimodale Polyethylenkopolymerzusammensetzung gemäß Anspruch 1, worin die Zusammensetzung ein Quellverhältnis von mindestens 1,7 bei einer scheinbaren Schergeschwindigkeit von 14,4 $s^{-1}$ hat.

3. Multimodale Polyethylenkopolymerzusammensetzung gemäß Anspruch 1, worin die Zusammensetzung ein ESCR von mindestens 300 Stunden und einen $SHI_{2.7/210}$ von mindestens 50, vorzugsweise mindestens 60, hat.

4. Multimodale Polyethylenkopolymerzusammensetzung gemäß Anspruch 1, worin die Zusammensetzung ein Quellverhältnis von mindestens 1,8 bei einer scheinbaren Schergeschwindigkeit von 28,8 s⁻¹ hat.

5. Multimodale Polyethylenkopolymerzusammensetzung gemäß Anspruch 1, worin die Zusammensetzung ein Quellverhältnis von mindestens 1,9 bei einer scheinbaren Schergeschwindigkeit von 72 s⁻¹ hat.

6. Multimodale Polyethylenkopolymerzusammensetzung gemäß Anspruch 1, worin die Zusammensetzung einen G'-Wert bei 2 kPa von mindestens 1000 Pa hat.

7. Zusammensetzung gemäß einem der vorangehenden Ansprüche, worin die Dichte mindestens 950 kg/m³, vorzugsweise mindestens 956 kg/m³, ist.

8. Zusammensetzung gemäß einem der vorangehenden Ansprüche, welche einen rheologischen Dispersitätsindex von mindestens 5 hat.

9. Zusammensetzung gemäß einem der vorangehenden Ansprüche, welche einen G'-Wert bei 2 kPa von wenigstens 1000 Pa hat.

10. Zusammensetzung gemäß einem der vorangehenden Ansprüche, welche ein Quellverhältnis von mindestens 1,7 bei einer scheinbaren Schergeschwindigkeit von 14,4 s⁻¹, und ein Quellverhältnis von mindestens 1,8 bei einer scheinbaren Schergeschwindigkeit von 28,8 s⁻¹, ein Quellverhältnis von mindestens 1,9 bei einer scheinbaren Schergeschwindigkeit von 72 s⁻¹ hat.

11. Zusammensetzung gemäß einem der vorangehenden Ansprüche, welche ein ESCR-Belltestergebnis von mindestens 1000 Stunden hat.

12. Zusammensetzung gemäß einem der vorangehenden Ansprüche, worin das mindestens eine Komonomer Buten, Hexan, oder Octen, vorzugsweise Buten, ist.

13. Ein Artikel, welcher eine Polyethylenzusammensetzung gemäß einem der vorangehenden Ansprüche umfasst, vorzugsweise ein spritzblasgeformter Artikel.

14. Eine multimodale Polyethylenkopolymerzusammensetzung gemäß Anspruch 1, welche eine Quellverhältnis von mindestens 1,7 bei einer scheinbaren Schergeschwindigkeit von 14,4 s⁻¹
einen $SHI_{2,7/210}$ von mindestens 50,
ein Quellverhältnis von mindestens 1,8 bei einer scheinbaren Schergeschwindigkeit von 28,8 s⁻¹; und
ein Quellverhältnis von mindestens 1,9 bei einer scheinbaren Schergeschwindigkeit von 72 s⁻¹ hat.

**Revendications**

1. Une composition de copolymère de polyéthylène multimodale préparée en utilisant un catalyseur de Ziegler Natta et ayant une densité à 23°C d'au moins 940 kg/m³ selon ISO 1183 et un $MFR_2$ dans la plage de 0,05 à 10 g/10 min selon ISO 1133, dans laquelle la composition a un ESCR d'au moins 300 heures selon ASTM 1693 et un index de polydispersion rhéologique d'au moins 3 ; et comprend :

   A) 25 à 65% en poids d'une fraction d'homopolymère d'éthylène de plus bas poids moléculaire ;
   B) 25 à 55% en poids d'une fraction de plus haut poids moléculaire d'un homopolymère ou d'un copolymère d'éthylène avec au moins un co-monomère $C_3$-$C_{10}$ ;
   C) 5 à 25% en poids d'une fraction de beaucoup plus haut poids moléculaire de copolymère d'éthylène avec au moins un co-monomère $C_3$-$C_{10}$ ;

2. Une composition de copolymère de polyéthylène multimodale telle que revendiquée à la revendication 1 dans laquelle la composition a un ratio de dilatation d'au moins 1,7 à un taux de cisaillement apparent de 14,4 s⁻¹.

3. Une composition de copolymère de polyéthylène multimodale telle que revendiquée à la revendication 1 dans laquelle la composition a un ESCR d'au moins 300 heures et un $SHI_{2,7/210}$ d'au moins 50, de préférence au moins 60.

4. Une composition de copolymère de polyéthylène multimodale telle que revendiquée à la revendication 1 dans laquelle la composition a un ratio de dilatation d'au moins 1,8 à un taux de cisaillement apparent de 28,8 s$^{-1}$.

5. Une composition de copolymère de polyéthylène multimodale telle que revendiquée à la revendication 1 dans laquelle la composition a un ratio de dilatation d'au moins 1,9 à un taux de cisaillement apparent de 72 s$^{-1}$.

6. Une composition de copolymère de polyéthylène multimodale telle que revendiquée à la revendication 1 dans laquelle la composition a une valeur G' à 2 kPa d'au moins 1000 Pa.

7. La composition selon une quelconque revendication précédente dans laquelle la densité est de au moins 950 kg/m$^3$, de préférence au moins 956 kg/m$^3$.

8. La composition selon une quelconque revendication précédente ayant un index de polydispersion rhéologique d'au moins 5.

9. La composition selon une quelconque revendication précédente ayant une valeur G' à 2 kPa d'au moins 1000 Pa.

10. La composition selon une quelconque revendication précédente ayant un ratio de dilatation d'au moins 1,7 à un taux de cisaillement apparent de 14,4 s$^{-1}$, un ratio de dilatation d'au moins 1,8 à un taux de cisaillement apparent de 28,8 s$^{-1}$, et un ratio de dilatation d'au moins 1,9 à un taux de cisaillement apparent de 72 s$^{-1}$.

11. La composition selon une quelconque revendication précédente ayant un résultat de test ESCR Bell d'au moins 1000 heures.

12. La composition selon une quelconque revendication précédente dans laquelle le au moins un co-monomère est le butène, l'hexène ou l'octène, de préférence le butène.

13. Un article comprenant une composition de polyéthylène selon une quelconque revendication précédente, de préférence un article moulé soufflé.

14. Une composition de copolymère de polyéthylène multimodale telle que revendiquée à la revendication 1 ayant un ratio de dilatation d'au moins 1,7 à un taux de cisaillement apparent de 14,4 s$^{-1}$, un SHI$_{2,7/210}$ d'au moins 50, un ratio de dilatation d'au moins 1,8 à un taux de cisaillement apparent de 28,8 s$^{-1}$ ; et un ratio de dilatation d'au moins 1,9 à un taux de cisaillement apparent de 72 s$^{-1}$.

Figure 1

Figure 2

Figure 3

Figure 4.

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 603935 A
- EP 1576047 A
- EP 1772486 A
- EP 1228101 A
- EP 1772485 A
- US 2010105839 A

- EP 688794 A
- WO 9951646 A
- WO 0155230 A
- WO 9535323 A
- WO 0022040 A

**Non-patent literature cited in the description**

- **B. HAGSTRÖM.** Conference on Polymer Processing (The Polymer Processing Society). *Extended Abstracts and Final Programme, Gothenburg,* 19 August 1997, vol. 4, 13
- **HEINO, E.L. ; LEHTINEN, A. ; TANNER J. ; SEPPÄLÄ, J.** Rheological characterization of polyethylene fractions. *Neste Oy, Porvoo, Finland, Theor. Appl. Rheol., Proc. Int. Congr. Rheol, 11th,* 1992, vol. 1, 360-362

- **HEINO, E.L.** The influence of molecular structure on some rheological properties of polyethylene. *Borealis Polymers Oy, Porvoo, Finland, Annual Transactions of the Nordic Rheology Society,* 1995